# EUROPÄISCHE PATENTSCHRIFT

(11) **EP 2 250 381 B1**
(45) Veröffentlichungstag und Bekanntmachung des Hinweises auf die Patenterteilung: **31.10.2012**
(21) Anmeldenummer: 09715223.5
(22) Anmeldetag: 20.02.2009
(51) Int. Cl.: F16B 25/10

(54) **SELBSTBOHRENDE SCHRAUBE**
SELF-BORING SCREW
VIS AUTOFOREUSE

(30) Priorität: 29.02.2008 DE 102008011933
(43) Veröffentlichungstag der Anmeldung: 17.11.2010
(73) Patentinhaber: SFS intec Holding AG, 9435 Heerbrugg (CH)
(72) Erfinder: MAIR, Roland, 6840 Götzis (AT)
(86) Internationale Anmeldenummer: PCT/EP2009/052025
(87) Internationale Veröffentlichungsnummer: WO 2009/106483

(56) Entgegenhaltungen:
- EP-A- 0 049 218
- EP-A- 1 445 498
- FR-A- 2 238 081

## Beschreibung

### Technisches Gebiet

Die vorliegende Erfindung betrifft eine selbstbohrende Schraube mit einem mit Gewinde versehenen Schraubenschaft und mit einem am freien Ende des Schraubenschaftes angebrachten Bohrteil mit einer Bohrspitze mit einer stumpfwinkeligen Bohrschneide und einem Bohrradius zum Erzeugen eines Kernloches für das Gewinde des Schraubenschaftes, wobei das Bohrteil mit axialem Abstand von der Bohrspitze einen oder mehrere quer zur Schraubenachse frei auskragende Flügel oder Lappen aufweist, dessen bzw. deren der Bohrspitze zugewandte Begrenzung als Bohrschneide ausgebildet ist, zum Erweitern des von der Bohrschneide der Bohrspitze erzeugten Kernloches wenigstens derart, dass das am Schraubenschaft angebrachte Gewinde frei in einer durch den oder die Flügel erzeugten Bohröffnung steht, so dass zwischen dem Gewinde und der Bohröffnung ein zusätzlicher Freiraum verbleibt, wobei der dem Bohrteil benachbarte Teil der Spitze des Schraubenschaftes als ein Kegelstumpf ausgebildet ist und wobei das Bohrteil in einem Bereich zwischen dem Flügel oder den Flügeln und dem als ein Kegelstumpf ausgebildeten Teil der Spitze eine Spanabfuhrzone aufweist,

### Stand der Technik

Solche selbstbohrenden Schrauben sind für diverse Spezialanwendungen bekannt. Aus dem Dokument EP 0 049 218 A2 ist eine solche selbstbohrende Schraube bekannt, mit einem am freien Ende des Schraubenschaftes angesetzten Bohrteil, welches in einen Schlitz eingreifend an dem Schraubenschaft befestigt und aus einem Bohrstahl oder einem Hartmetall gefertigt ist. An dem Bohrteil sind mit axialem Abstand von der Bohrspitze ein oder zwei quer zur Schraubenachse frei auskragende Flügel vorgesehen, deren der Bohrspitze zugewandte Begrenzung als Bohrschneide ausgebildet ist. Der Schraubenschaft läuft in einer Spitze aus, von der aus sich der Schlitz in den Schraubenschaft erstreckt. Die Spitze erstreckt sich ihrerseits auf den beiden großen Flächen des Bohrteils bis in den Bereich des oder der außen an den Flächen angesetzten oder angeformten Flügel(s).

Eine selbstbohrende Schraube der eingangs genannten Art, die aus einem Firmenprospekt mit dem Titel "Hart- oder Weichholz auf hochfeste Stahlunterkonstruktionen - Für die Direktmontage: Hochleistungsbohrschrauben spedec SCT von SFS Stadler" aus dem Jahr 1987 bekannt ist, wird zum Verbinden von Holz und Stahlplatten verwendet. Dabei durchbohrt die selbstbohrende Schraube meist zuerst das Holz. Hier kommen die mit dem Bohrteil über eine Sollbruchstelle verbundenen Flügel zum Einsatz. Sie haben die Aufgabe, während des Bohrens in eine teilweise mehrere Zentimeter dicke Holzschicht den Bohrdurchmesser mindestens auf den Gewindeaußendurchmesser des an dem Schraubenschaft angebrachten Gewindes aufzuweiten. Je größer der Bohrdurchmesser des aufgeweiteten Loches gewählt wird, umso weniger reiben die Holzspäne am Gewinde. Dadurch wird verhindert, dass das Gewinde erhitzt und damit die Oberfläche beschädigt wird. Bohrt sich das Bohrteil dann in die nächste, die metallische Schicht, brechen die Flügel an ihrer Sollbruchstelle ab und das Bohrteil erstellt eine passende Bohröffnung für das Gewinde des Schraubenschaftes. Dieses Gewinde formt nun im nächsten Schritt das Gewinde in der Bohröffnung und die Schraube wird angezogen. Um eine möglichst gute Wirkung zu erzielen, werden die Flügel üblicherweise am Bohrteil so nahe wie möglich am Schraubenschaft und somit nahe am Gewindeanfang angebracht. Damit wird erreicht, dass die Flügel das Gewinde bestmöglich schützen und nicht zu früh eliminiert werden. Für den Spanfluss werden dabei herkömmlicherweise in erster Linie die durch die Flügel selbst entstehenden Späne in Betracht gezogen. Die durch die Bohrspitze selbst verursachten Späne gelangen durch eine schmale Spanabfahrzone zwischen dem als ein Kegelstumpf ausgebildeten Teil der Spitze und dem Flügel oder den Flügeln in die durch den oder die Flügel hergestellten Öffnungen und werden so von der Schneidkante weggebracht. Bei allen diesen selbstbohrenden Schrauben besteht die Gefahr einer übermäßigen Erwärmung der Bohrspitze, weil die an der Bohrspitze entstehenden Späne mit mehr als maximal zulässiger Materialverdichtung von dem Bohrteil weggefördert werden. Dies wiederum kann zu einem Bohrversagen dieser selbstbohrenden Schrauben führen.

Bei einer aus dem Dokument FR-A-2 238 081 bekannten selbstbohrenden Schraube ist das Bohrteil zum Bohren des Kernloches zweistufig ausgebildet. Die Bohrspitze am freien Ende des Bohrteils weist eine Bohrschneide mit einem Durchmesser auf, der wesentlich kleiner als der Durchmesser des zu bohrenden Kernloches ist. An diesen Teil kleineren Durchmessers schließt sich ein im Querschnitt kreuzförmiger Teil mit vier Bohrflügeln an, von denen zwei an ihren der Bohrspitze benachbarten unteren Enden mit Bohrschneiden versehen sind, welche das durch die Bohrspitze geschnittene Loch zu einem Loch mit dem Kernlochdurchmesser erweitern. Auf der zu der Bohrspitze entgegengesetzten Seite ist das Bohrteil konisch verjüngt und geht anschließend wieder sich konisch erweiternd schließlich in den mit Gewinde versehenen Schaft der Schraube über. Der sich konisch verjüngende und erweiternde Teil des Bohrteils soll die durch die Bohrschneide geschnittenen Späne aufnehmen. Aus diesem Späneaufnahmeraum können die Späne nicht entweichen, weil sich anschließend der Schraubenschaft anschließt, der das durch die Bohrschneiden geschnittene Loch beim weiteren Eindrehen der Schraube fest verschließt.

### Darstellung der Erfindung

Aufgabe der Erfindung ist es, eine selbstbohrende Schraube der eingangs genannten Art für Verbindungen aus mindestens einer ersten, weicheren Schicht und einer zweiten, härteren Schicht so zu gestalten, dass die durch die Bohrspitze verursachten Späne von dem Bohrteil aus in Richtung Bohröffnung besser abgefördert werden und so eine übermäßige Erwärmung der Bohrspitze verhindert wird.

Dies gelingt erfindungsgemäß dadurch, dass der als ein Kegelstumpf ausgebildete Teil der Spitze des Schraubenschaftes oberhalb des Flügels oder der Flügel angeordnet ist und dass die der Bohrspitze zugewandte Begrenzung des Flügels oder der Flügel mit dem Bohrradius einen Schnittpunkt bildet, der zum Transport der von der Bohrschneide der Bohrspitze geschnittenen Späne nach außen in den Freiraum einen eine Mindestbreite der Spanabfuhrzone festlegenden Abstand von dem als ein Kegelstumpf ausgebildeten Teil der Spitze des Schraubenschaftes aufweist, welcher 2/3 der Länge der Schneidkante der Bohrschneide an der Bohrspitze entspricht. Dadurch wird erreicht, dass die Späne, wenn überhaupt, mit weit weniger als der maximal zulässigen Materialverdichtung von dem Bohrteil wegbefördert werden. Die Späne werden erfindungsgemäß nicht am direkten Austritt gehindert und somit nicht im Spanfluss abgebremst. Schon durch ein geringes Abbremsen der Spanflussgeschwindigkeit würde es nämlich zu einem Stau der Späne kommen. Dadurch würde der Spanfluss unterbrochen und würden die Späne verdichtet. Die dadurch entstehende Wärme würde das Bohrverhalten negativ beeinflussen, denn die Schneidkante, der oder die Flügel und auch das Gewinde würden aufgrund der Erwärmung beschädigt oder gar deformiert werden. Die Folge wäre ein Versagen der Schraubenverbindung. Ein solches Versagen wäre bei funktional oder ästhetisch kritischen Verbindungen nicht akzeptabel. Überraschend hat sich gezeigt, dass sich die vorstehenden Probleme, die aufgrund von Späneverdichtung und Abbremsen der Spanflussgeschwindigkeit auftreten, vermeiden lassen, wenn erfindungsgemäß der als ein Kegelstumpf ausgebildete Teil der Spitze des Schraubenschaftes nach oberhalb des oder der Flügel verlagert wird und dadurch ein Freiraum für eine breitere Spanabfuhrzone geschaffen wird, deren Mindestbreite in einer bestimmten Relation zur Schneidkantenlänge der Bohrspitze steht, nämlich 2/3 derselben entspricht.

Vorteilhafte Ausgestaltungen der selbstbohrenden Schraube nach der Erfindung bilden die Gegenstände der Unteransprüche.

Wenn in einer Ausgestaltung die Spanabfuhrzone jeweils auf der Spanflussseite und in der selben Ebene wie die Flügel liegt, wird noch sicherer erreicht, dass die von der Bohrspitze herkommenden Späne ungehindert mindestens teilweise über die Flügelfläche nach außen und /oder oben transportiert werden. Läge die Flügelebene über der Ebene der Spanabflusszone, so würden die Späne am direkten Austritt gehindert werden.

Wenn in einer weiteren Ausgestaltung das Bohrteil als ein Plättchen aus Flachstahl hergestellt wird, kann das Bohrteil auf ein absolut minimales Volumen gebracht werden. Die Ausgestaltung aus Flachstahl lässt die Möglichkeit zu, dass durch die Materialwahl die Bohreigenschaften, aber auch die Torsionsbeanspruchung der Flügel auf die Anwendung abgestimmt werden kann. Das Bohrteil kann so z.B. aus hochfestem oder ultrahochfestem Material hergestellt sein.

Wenn in einer weiteren Ausgestaltung das Bohrteil aus Flachstahl gestanzt wird, können die Form des Bohrteils und die Schneidenform in einem Arbeitsgang hergestellt werden.

In einer weiteren Ausgestaltung sind das Bohrteil und der Schraubenschaft fest miteinander verbunden. Durch die Bohrbeanspruchung wirken auf die Schraube enorme Kräfte in axialer und vertikaler Richtung ein. Durch die feste Verbindung von Schraubenschaft und Bohrteil wird ein sicheres Übertragen der Kräfte erreicht. Dabei muss die Verbindung dieser beiden Schraubenteile so ausgelegt werden, dass auch Spitzenbelastungen, die kurzzeitig oder während des Transports zum Verarbeitungsort auftreten können, keine Relativverschiebung der beiden Schraubenteile verursachen können.

Wenn in einer weiteren Ausgestaltung der als ein Kegelstumpf ausgebildete Teil der Spitze des Schraubenschaftes fast zylindrisch ausgebildet ist, ergibt sich eine radial nach außen laufende Spanabflusszone.

Ausführungsbeispiele der Erfindung werden im Folgenden unter Bezugnahme auf die Zeichnungen näher erläutert.

### Kurze Beschreibung der Zeichnungen

Es zeigt
- Fig. 1: eine selbstbohrende Schraube nach der Erfindung mit einem Bohrteil, das eine schräg nach außen laufende Spanabflusszone aufweist,
- Fig. 2: eine selbstbohrende Schraube nach Fig. 1 in Seitenansicht;
- Fig. 3: eine selbstbohrende Schraube nach der Erfindung mit einem Bohrteil, das eine radial nach außen laufende Spanabflusszone aufweist.
- Fig. 4 - 6: einen Bohrverlauf mit einer selbstbohrenden Schraube nach der Erfindung und
- Fig. 7: eine selbstbohrende Schraube nach dem Stand der Technik.

### Ausführliche Beschreibung von Ausführungsformen und Erfindung

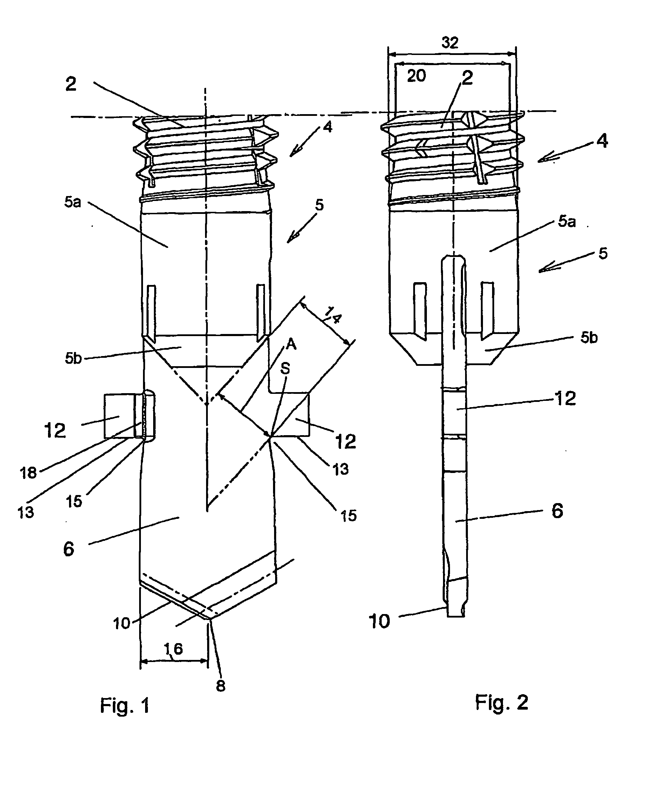

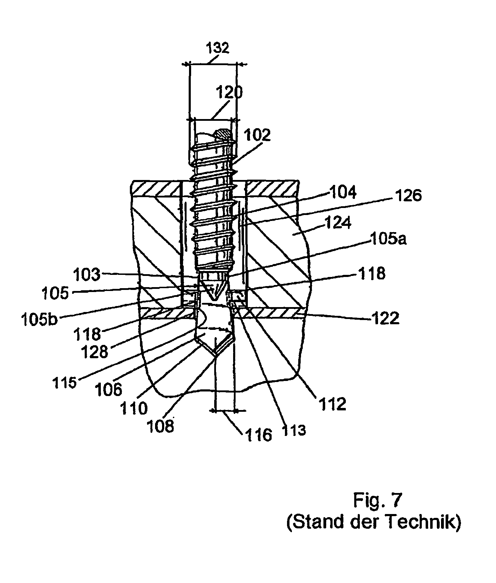

Bevor Ausführungsbeispiele der Erfindung, die in den Fig. 1-6 dargestellt sind, näher beschrieben werden, ist es zweckmäßig, kurz auf den Stand der Technik einzugehen, der in Fig. 7 dargestellt ist. In Fig. 7 werden die gleichen Bezugszahlen wie in den Fig. 1-6 verwendet, jedoch jeweils um ein 100 erhöht. Dargestellt ist eine insgesamt mit 102 bezeichnete selbstbohrende Schraube, die einen mit Gewinde versehenen Schraubenschaft 104 hat. Der Schraubenschaft 104 läuft in einer Spitze 105 aus, die einen nicht mit Gewinde versehenen zylindrischen Teil 105a und einen ebenfalls nicht mit Gewinde versehenen kegelförmigen Teil 105b aufweist. Das Gewinde des Schraubenschaftes 104 ist ein selbstschneidendes Gewinde. Am freien Ende des Schraubenschaftes 104 ist ein (in Fig. 7 nicht sichtbarer) Schlitz vorhanden, der sich in die Spitze 105 erstreckt und in den ein plättchenförmig ausgebildetes Bohrteil 106 eingesetzt ist. Durch entsprechende Querschnittsform des eingesetzten Endes des Bohrteils 106 und durch Verformungen 103 an der Spitze 105 des Schraubenschaftes 104 besteht eine formschlüssige Verbindung zwischen dem Bohrteil 106 und dem Schraubenschaft 104. Das Bohrteil 106 besitzt an seinem freien Ende eine Bohrspitze 108 mit einer stumpfwinkeligen Bohrschneide 110. Der Schraubenschaft 104 und der (in Fig. 7 nicht sichtbare) Kopf der Schraube 102 können aus einem rostfreien Stahl oder sonstigen Metall oder aus Kunststoff bestehen. Das plättchenförmige Bohrteil 106 ist aus einem Bohrstahl oder einem Hartmetall gefertigt, so dass auf einfache Weise auch Stähle höchster Festigkeit durchbohrt werden können. An das Bohrteil 106 schließen mit axialem Abstand von der Bohrspitze 108 zwei einander gegenüberliegend nach entgegengesetzten Richtungen quer zur Schraubenachse frei auskragende Flügel 112 an. Die der Bohrspitze 108 zugewandten Begrenzungen der Flügel 112 sind als Bohrschneiden 113 ausgebildet. Der Bohrradius des Bohrteils 106 wird an dessen Stelle größten Durchmessers gemessen und ist mit 116 bezeichnet. Die Flügel 112 liegen in einer Ebene mit dem plättchenförmig ausgebildeten Bohrteil 106. An der Anschlussstelle der Flügel 112 an dem Bohrteil 106 ist eine annähernd parallel zur Schraubenachse verlaufende Sollbruchkerbe 118 vorgesehen.

Bei dem vorstehend beschriebenen Ausführungsbeispiel des Standes der Technik, der dem nach dem eingangs bereits erwähnten Dokument EP 0 049 218 A2 entspricht, soll eine Abdeckbahn aus Leichtmetall mit einem Stahlträger 122 verschraubt werden, wobei zwischen diesen beiden Teilen ein Isolierkörper oder allgemein eine weichere Schicht 124, angeordnet ist. Die Bohrspitze 108 des Bohrteils 106 bohrt zuerst durch die Abdeckung der weicheren Schicht 124, worauf dann die Bohrschneiden 113 der Flügel 112 bei der Abdeckung zum Einsatz kommen. Der Gewindeabschnitt des Schraubenschaftes 104 kann dadurch ohne Berührung mit der Abdeckung eine Bohröffnung 126 passieren. Anschließend dringt das Bohrteil 106 mit der Bohrspitze 108 in eine härtere Schicht, d.h. hier in den Stahlträger 122 ein, wobei nach dem Durchtritt des Bohrteils 106 die Flügel 112 an dem Stahlträger 122 zur Anlage kommen. Da nunmehr das auf die Flügel 112 ausgeübte Drehmoment die Haltekraft derselben an dem Bohrteil 106 übersteigt, brechen die Flügel 112 an den Sollbruchkerben 118 ab. Bei dem weiteren Eindrehen der Schraube gelangt dann der Gewindeteil des Schraubenschaftes 104 in die Bohröffnung 128 in dem Stahlträger 122, so dass die endgültige Befestigung erfolgen kann. Der Kerndurchmesser des Gewindes auf dem Schraubenschaft 104 ist in Fig. 7 mit 120 bezeichnet.

Im Folgenden wird nun unter Bezugnahme auf die Darstellung in den Fig. 1-6 beschrieben, worin sich eine selbstbohrende Schraube 2 nach der Erfindung von der mit Bezug auf Fig. 7 beschriebenen bekannten selbstbohrenden Schraube 102 unterscheidet. Dabei wird der Aufbau der Schraube 2, soweit er sich von der Schraube 102 nicht unterscheidet, zur Vermeidung von Wiederholungen nicht erneut beschrieben. Insoweit gelten die Ausführungen zu der bekannten Schraube 102, die mit Bezug auf Fig. 7 gemacht worden sind, auch für die Schraube 2 nach den Fig. 1-6. Die Übersicht wird dadurch erleichtert, dass sich die im Zusammenhang mit den Schrauben 102 und 2 verwendeten Bezugszahlen jeweils um 100 unterscheiden.

Bei der bekannten Schraube 102 erstreckt sich gemäß der Darstellung in Fig. 7 die Spitze 105b des Schraubenschaftes 104 auf den beiden großen Flächen des Bohrteils 106, von denen eine in Fig. 7 sichtbar ist, bis in den Bereich der außen an den Flächen angeformten Flügel 112. Diese Anordnung hat bei der Förderung der durch das Bohrteil 106 entstehenden Späne in die durch die Flügel gebohrten Öffnungen 130 und 126 eine Behinderung des Spanflusses zur Folge. Zur Vermeidung dieses Nachteils und der damit verbundenen weiteren Nachteile ist bei der selbstbohrenden Schraube 2 nach der Erfindung gemäß der Darstellung in den Fig. 1 bis 6 der kegelige Teil 5b der Spitze 5 des Schraubenschaftes 4 nicht als ein vollkommener Kegel ausgebildet, der sich bis in den Bereich der Flügel 112 erstreckt, sondern als ein Kegelstumpf oberhalb der Flügel 12. Dadurch ergibt sich oberhalb der Flügel 12 ein größerer Freiraum, der bei radialer Späneabfuhr den Abstand der Flügel 12 von dem benachbarten Ende der Spitze 5 des Schraubenschaftes 4 und somit die Breite einer Spanabfuhrzone 14 vergrößert, was im Folgenden näher beschrieben ist.

In einer Ausführungsvariante gemäß Fig. 1 ist die selbstbohrende Schraube 2 mit einem Bohrteil 6 gezeigt, das eine schräg nach außen laufende Spanabflusszone 14 aufweist. Die selbstbohrende Schraube 2 hat ein am freien Ende des Schraubenschaftes 4 angebrachtes Bohrteil 6, das mit axialem Abstand von der Bohrspitze 8 zwei quer zur Schraubenachse frei auskragende Flügel 12 aufweist. Deren der Bohrspitze 8 zugewandte Begrenzung ist als Bohrschneide 13 ausgebildet. Die Spanabfuhrzone 14 des Bohrteils 6 ist dadurch gebildet, dass die der Bohrspitze 8 zugewandte Begrenzung jedes Flügels 12 mit dem Bohrradius 16 einen Schnittpunkt S bildet, der von dem Schraubenschaft 4 mindestens einen Abstand A aufweist, welcher 2/3 der Schneidkantenlänge der Bohrspitze 8 entspricht. Wenn wie in dem Ausführungsbeispiel nach den Fig. 1 und 2 die Spitze 5 des Schraubenschaftes 4 in einem kegelstumpfförmigen Teil 5b endigt, ist der Abstand A zwischen der Mantellinie des kegelstumpfförmigen Teils 5b und einer dazu parallelen Geraden durch den Schnittpunkt S definiert, wie in Fig. 1 dargestellt. A ist zugleich die Breite der Spanabfuhrzone 14. Die so gebildete Spanabfuhrzone 14 ermöglicht, dass die von der Bohrschneide 10 erzeugten Späne störungsfrei, d.h. ohne Stau abtransportiert werden können. Das durch die Bohrschneide 10 geschnittene Material wird als Span oder Spanteil während des Bohrvorganges durch die Rotationsbewegung der Schraube 2 von der Bohrspitze 8 weg in Richtung des Schnittpunktes 6 an einem unteren Flügelanschluss 15 gefördert. Wird nun für die Spanabfuhrzone 14 zwischen dem unteren Flügelanschluss 15 und dem Schraubenschaft 4 mindestens eine Breite von 2/3 der Länge der Schneidkante 10 an der Bohrspitze 8 vorgesehen, kann auch bei härteren oder ungeeigneteren Materialien der zu durchbohrenden weicheren Schicht 24, wie dies z.B. Hartholz darstellt, der ungestörte Spanabfluss sichergestellt werden. Eine Verdichtung des abzuführenden Spanes auf maximal 2/3 des nach dem Schnitt entstandenen Querschnittes ist möglich. Damit ist sichergestellt, dass auch kritisch große Späne ohne den Spanabfluss zu verstopfen aus dem Bereich des Bohrteils 6 weg transportiert werden.

Fig. 2 zeigt die selbstbohrende Schraube 2 nach Fig. 1 in Seitenansicht. Die Vorteile der Spanabfuhrzone 14 bei der selbstbohrenden Schraube 2 nach der Erfindung werden besonders in der Seitenansicht deutlich. Dadurch, dass die Spanabfuhrzone 14 jeweils auf der Spanflussseite und in derselben Ebene wie die Flügel 12 liegt, kann der Span von der Bohrschneide 10 mindestens ab der Höhe des unteren Flügelanschlusses 15 in axialer Richtung weitgehend in derselben Ebene und durch die Bohrrotation nach außen bewegt und vom Bohrteil 6 weg transportiert werden. Fig. 2 zeigt auch ein aus Flachstahl hergestelltes Bohrteil 6, welches die Vorteile durch ein minimales Volumen des Bohrteiles insbesondere zum Wegtransportieren von Spänen von dem Bohrteil bietet. Flachstahl eignet sich besonders, um die Form und die Bohrschneiden 10 und 13 in einem Arbeitsgang durch Stanzen herzustellen. Eine Nachbehandlung oder Nachbearbeitung der Bohrschneiden 10 und 13 der Bohrspitze 8 bzw. der Flügel 12 kann größtenteils entfallen.

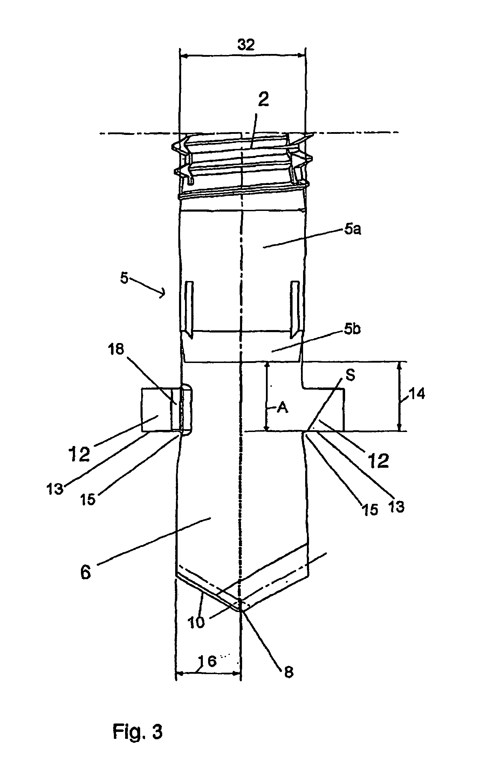

In Fig. 3 ist eine selbstbohrende Schraube 2 mit einem Bohrteil 6 gezeigt, das eine radial nach außen laufenden Spanabflusszone 14 aufweist. Der kegelstumpfförmige Teil 5b ist hier nahezu zylindrisch. Dabei ist die Breite der Spanabfuhrzone 14 oder der Abstand A zwischen dem unteren Flügelanschluss 15 und dem Schraubenschaft 4 definiert und mindestens gleich 2/3 der Länge der Bohrschneidenlänge der Bohrspitze 8. Selbst wenn der zylindrische Schraubenschaft einen Schaftaußendurchmesser 32 hat, der gleich dem oder nur wenig kleiner als der Bohrlochdurchmesser ist, wird durch die Spanabfuhrzone 14 sichergestellt, dass die durch die Bohrschneide 10 entstehenden Späne ungehindert seitlich zwischen dem unteren Flügelanschluss 15 und dem Schraubenschaft 4 nach außen transportiert und somit vom Bohrteil 6 weg gefördert werden. Wird das Bohrteil 6 wie hier aus einem zweiten Element hergestellt, z.B. aus Flachstahl, muss sichergestellt werden, dass das Bohrteil 6 fest an dem Schraubenschaft 4 fixiert wird. Damit wird verhindert, dass die Bohrspitze 8 konzentrisch verschoben wird und nicht mehr die volle Leistung erreichen kann.

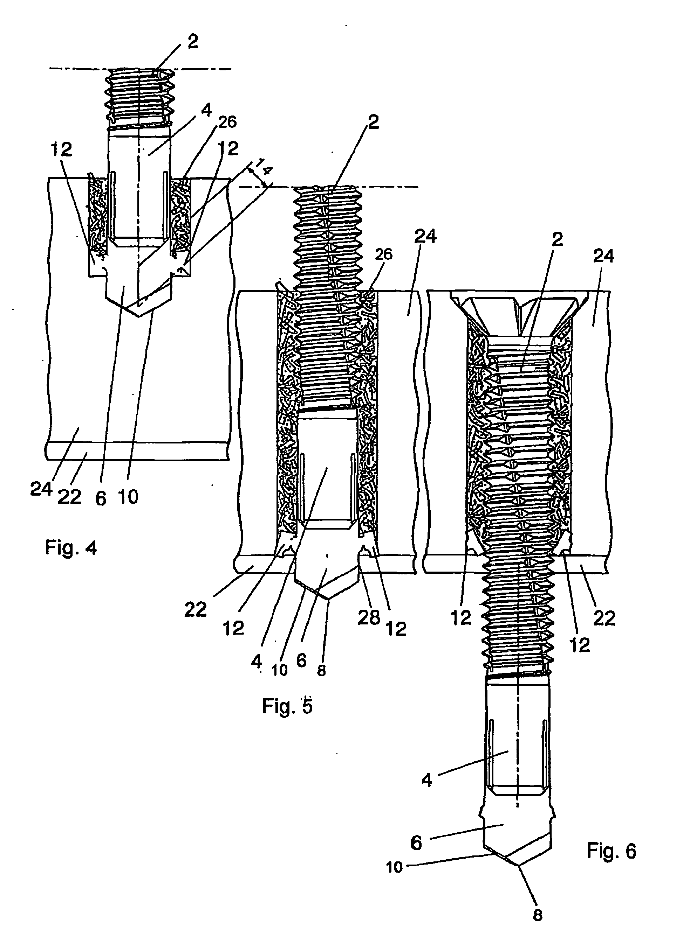

Die Fig. 4 bis 6 zeigen einen Bohrverlauf mit einer selbstbohrenden Schraube 2 nach der Erfindung. Dabei zeigt Fig. 4 die Bohrphase in der weicheren Schicht 24. Die Flügel 12 erweitern das von der Bohrschneide 10 erzeugte Kernloch in der weicheren Schicht 24 so, dass das am Schraubenschaft 4 angebrachte Gewinde frei in der Bohröffnung 30 steht. Es bleibt zusätzlich zwischen dem Gewinde und dem erweiterten Kernloch ein Freiraum. Dieser Freiraum wird zur Spanabfuhr benutzt. Die von der Bohrschneide 10 geschnittenen Späne werden dabei über die Spanabfuhrzone 14 vor dem Schraubenschaft 4 nach außen in den oben beschriebenen Freiraum transportiert und so von dem Bohrteil 6 entfernt. Dann wird in einer weiteren Bohrphase, die in Fig. 5 abgebildet ist, in der zweiten, härteren Schicht 22 eine Bohröffnung 28 hergestellt. Die Flügel 12 sind idealerweise so angebracht, dass nach dem Durchfallen der Bohrspitze 8 die Flügel 12 einen Weg von 2 bis 3 Millimeter bis zum Auftreffen auf der härteren Schicht 22 zurücklegen. Beim Auftreffen der Flügel 12 auf die härtere Schicht 22 werden die Flügel 12 wegen des Durchtrittschocks so hoch belastet, dass diese abbrechen. Nun wird wie in Fig. 6 gezeigt das Gewinde in der härteren Schicht 22 eingeformt und die Schraube 2 angezogen.

### Bezugszeichenliste

- 2, 102: Selbstbohrende Schraube
- 3, 103: Verformung
- 4, 104: Schraubenschaft
- 5, 105: Spitze
- 5a, 105a: zylindrischer Teil
- 5b, 105b: kegeliger oder kegelstumpfförmiger Teil
- 6, 106: Bohrteil
- 8, 108: Bohrspitze
- 10,110: Bohrschneide
- 12, 112: Flügel
- 13, 113: Bohrschneide
- 14: Spanabfuhrzone
- 15, 115: Flügelanschluss
- 16, 116: Bohrradius
- 18, 118: Sollbruchkerbe
- 20, 120: Kerndurchmesser
- 22, 122: härtere Schicht (Stahlträger)
- 24, 124: weichere Schicht (Holz)
- 26, 126: Bohröffnung
- 28, 128: Bohröffnung
- 32, 132: Schaftaußendurchmesser

- A: Abstand
- S: Schnittpunkt

## Patentansprüche

1. Selbstbohrende Schraube mit einem mit Gewinde versehenen Schraubenschaft (4) und mit einem am freien Ende des Schraubenschaftes (4) angebrachten Bohrteil (6) mit einer Bohrspitze (8) mit einer stumpfwinkeligen Bohrschneide (10) und einem Bohrradius (16) zum Erzeugen eines Kernloches für das Gewinde des Schraubenschaftes (4), wobei das Bohrteil (6) mit axialem Abstand von der Bohrspitze (8) einen oder mehrere quer zur Schraubenachse frei auskragende Flügel (12) oder Lappen aufweist, dessen bzw. deren der Bohrspitze (8) zugewandte Begrenzung als Bohrschneide (13) ausgebildet ist, zum Erweitern des von der Bohrschneide (10) der Bohrspitze erzeugten Kernloches wenigstens derart, dass das am Schraubenschaft (4) angebrachte Gewinde frei in einer durch den oder die Flügel (12) erzeugten Bohröffnung (26) steht, so dass zwischen dem Gewinde und der Bohröffnung (30) ein zusätzlicher Freiraum verbleibt, wobei der dem Bohrteil (6) benachbarte Teil (5b) der Spitze des Schraubenschaftes (4) als ein Kegelstumpf ausgebildet ist und
wobei das Bohrteil (6) in einem Bereich zwischen dem Flügel oder den Flügeln (12) und dem als ein Kegelstumpf ausgebildeten Teil (5b) der Spitze eine Spanabfuhrzone (14) aufweist,
**dadurch gekennzeichnet, dass** der als ein Kegelstumpf ausgebildete Teil (5b) der Spitze (5) des Schraubenschaftes (4) oberhalb des Flügels oder der Flügel (12) angeordnet ist und
dass die der Bohrspitze (8) zugewandte Begrenzung des Flügels oder der Flügel (12) mit dem Bohrradius (16) einen Schnittpunkt (S) bildet, der zum Transport der von der Bohrschneide (10) der Bohrspitze (8) geschnittenen Späne nach außen in den Freiraum einen eine Mindestbreite der Spanabfuhrzone (14) festlegenden Abstand (A) von dem als ein Kegelstumpf ausgebildeten Teil (5b) der Spitze (5) des Schraubenschaftes (4) aufweist, welcher 2/3 der Länge der Schneidkante der Bohrschneide (10) an der Bohrspitze (8) entspricht.

2. Selbstbohrende Schraube nach Anspruch 1, **dadurch gekennzeichnet, dass** die Spanabfuhrzone (14) jeweils auf der Spanflussseite und in der selben Ebene wie der (die) Flügel (12) liegt.

3. Selbstbohrende Schraube nach Anspruch 1, **dadurch gekennzeichnet, dass** das Bohrteil (6) als ein Plättchen aus Flachstahl hergestellt ist.

4. Selbstbohrende Schraube nach Anspruch 3, **dadurch gekennzeichnet, dass** das Bohrteil (6) aus Flachstahl gestanzt ist.

5. Selbstbohrende Schraube nach Anspruch 2 oder 3, **dadurch gekennzeichnet, dass** das Bohrteil (6) und der Schraubenschaft (4) fest miteinander verbunden sind.

6. Selbstbohrende Schraube nach einem der Ansprüche 1 bis 5, **dadurch gekennzeichnet, dass** das Bohrteil (6) aus hochfestem Material hergestellt ist.

7. Selbstbohrende Schraube nach einem der Ansprüche 1 bis 6, **dadurch gekennzeichnet, dass** der als ein Kegelstumpf ausgebildete Teil (5b) der Spitze (5) des Schraubenschaftes (4) fast zylindrisch ausgebildet ist.

## Claims

1. A self-drilling screw, with a screw shank (4) provided with a thread and with a drilling member (6), which is mounted at the free of the screw shank (4), with a drill tip (8) having an obtuse-angled drill cutting edge (10) and drill radius (16) for creating a tap hole for the thread of the screw shank (4), wherein the drilling member (6) has at an axial distance from the drill tip (8) one or more wings (12) or lugs which project freely transversely to the screw axis and the boundary of which facing the drill tip (8) is in the form of a drill cutting edge (13) for widening the tap hole created by the drill cutting edge (10) of the drill tip at least in such a way that the thread provided on the screw shank (4) is free-standing in a drilled opening (26) created by the wing or wings (12), so that an additional free space remains between the thread and the drilled opening (30), wherein the part (5b) of the tip of the screw shank (4) adjacent the drilling member (6) is in the form of a truncated cone and wherein the drilling member (6) has a chip removal zone (14) in a region between the wing or the wings (12) and the part (5b) of the tip in the form of a truncated cone,
**characterised in that** the part (5b) of the tip (5) of the screw shank (4) in the form of a truncated cone is arranged above the wing or the wings (12) and **in**
**that** the boundary of the wing or the wings (12) facing the drill tip (8) forms with the drill radius (16) a point of intersection (S) which for conveying the chips cut by the drill cutting edge (10) of the drill tip (8) outwards into the free space has a distance (A), which defines a minimum width of the chip removal zone (14), from the part (5b) of the tip (5) of the screw shank (4) in the form of a truncated cone, and which corresponds to 2/3 of the length of the cutting edge of the drill cutting edge (1) on the drill tip (8).

2. A self-drilling screw according to Claim 1, **characterised in that** the chip removal zone (14) lies respectively on the chip flow side and in the same plane as the wing or wings (12).

3. A self-drilling screw according to Claim 1, **characterised in that** the drilling member (6) is a tool tip made of flat steel.

4. A self-drilling screw according to Claim 3, **characterised in that** the drilling member (6) is stamped from flat steel.

5. A self-drilling screw according to Claim 2 or 3, **characterised in that** the drilling member (6) and the screw shank (4) are securely joined together.

6. A self-drilling screw according to any one of Claims 1 to 5, **characterised in that** the drilling member (6) is produced from high-strength material.

7. A self-drilling screw according to any one of Claims 1 to 6, **characterised in that** the part (5b) of the tip (5) of the screw shank (4) in the form of a truncated cone is of almost cylindrical shape.

## Revendications

1. Vis auto-foreuse comportant une tige (4) équipée d'un filetage et une partie de forage (6) montée à l'extrémité libre de la tige (4) et équipée d'une pointe de forage (8) comportant une lame de forage (10) à angle obtus et un rayon de forage (16) pour la formation d'un avant trou pour le filetage de la tige (4) de la vis, la partie de forage (6) comportant une ou plusieurs ailette(s) (12) ou oreillette(s) faisant librement saillie transversalement à l'axe de la vis, à distance axiale de la pointe de forage (8), et dont l'extrémité tournée vers la pointe de forage (8) est réalisée sous la forme d'une lame de forage (13) pour élargir l'avant trou formé par la lame de forage (10) de la pointe de forage, au moins de sorte que le filetage prévu sur la tige (4) de la vis soit logé librement dans une ouverture de forage (26) formée par la ou les ailette(s) (12), pour que, entre le filetage et l'ouverture de forage (30) subsiste un espace libre supplémentaire, la partie (5b) de la pointe de la tige (4) de la vis voisine de la partie de forage (6) étant réalisée sous la forme d'un tronc de cône, et la partie de forage (6) comportant, dans une zone située entre la ou les ailette(s) (12) et la partie (5b) de la pointe réalisée sous la forme d'un tronc de cône, une zone d'évacuation des copeaux (14),
**caractérisée en ce que**
la partie (5b) de la pointe (5) de la tige (4) de la vis réalisée sous la forme d'un tronc de cône est située au-dessus de la ou des ailette(s) (12), et l'extrémité de la ou des ailette(s) (12) tournée vers la pointe de forage (8) forme avec le rayon de forage (16) un point d'intersection (S) qui est situé, pour le transport des copeaux découpés par la lame de forage (10) de la pointe de forage (8) vers l'extérieur dans l'espace libre, à une distance (A) déterminant la largeur minimum de la zone d'évacuation des copeaux (14), de la partie (5b) de la pointe (5) de la tige (4) de la vis réalisée sous la forme d'un tronc de cône qui correspond à deux tiers de la longueur de l'arête coupante de la lame de forage (10) de la pointe de forage (8).

2. Vis auto-foreuse conforme à la revendication 1,
**caractérisée en ce que**
la zone d'évacuation des copeaux (14) est respectivement située du côté du déplacement des copeaux et dans le même plan que la ou les ailette(s) (12).

3. Vis auto-foreuse conforme à la revendication 1,
**caractérisée en ce que**
la partie de forage (6) est réalisée sous la forme d'une plaquette en acier plat.

4. Vis auto-foreuse conforme à la revendication 3,
**caractérisée en ce que**
la partie de forage (6) est estampée à partir d'acier plat.

5. Vis auto-foreuse conforme à la revendication 2 ou 3,
**caractérisée en ce que**
la partie de forage (6) et la tige (4) de la vis sont reliées solidairement l'une à l'autre.

6. Vis auto-foreuse conforme à l'une des revendications 1 à 5,
**caractérisée en ce que**
la partie de forage (6) est réalisée en un matériau très rigide.

7. Vis auto-foreuse conforme à l'une des revendications 1 à 6,
**caractérisée en ce que**
la partie (5b) de la pointe (5) de la tige (4) de la vis réalisée sous la forme d'un tronc de cône est presque cylindrique.
